# EUROPEAN PATENT APPLICATION

(11) **EP 1 610 448 A2**
(43) Date of publication of application: **28.12.2005**
(21) Application number: 05013145.7
(22) Date of filing: 17.06.2005
(51) Int. Cl.: H02K 41/03

(54) **Linear motor**

(30) Priority: 21.06.2004 JP 2004182743
(71) Applicant: FANUC LTD, Minamitsuru-gun, Yamanashi 401-0597 (JP)
(72) Inventor: Sogabe, Masatoyo, Gotenba-shi Shizuoka 412-0043 (JP); Shimura, Yoshifumi, Fujiyoshida-shi Yamanashi 403-0017 (JP); Oda, Takeshi, Kanagawa 248-0032 (JP)
(74) Representative: Schmidt, Steffen J.

(57) **Abstract**

A field yoke (2) on which permanent magnets are mounted is fixed to a stationary member (1) of a machine. An armature (3) composed of coils is attached to a surface of a table (4), which is guided to move by a rectilinear movement guide (5), opposed to the field yoke (2). The field yoke (2) and the armature (3) constitute a linear motor. A compressed air feeding means (b) is mounted to the table (4). Compressed air jetting ports (6c) of the compressed air feeding means (6) are disposed ahead of and behind the table (4). While moving the table (4), compressed air is jetted to a movement surface, on which the table (4) moves, in order to remove foreign matter. Thus, as the movement surface on which the moving member (table (4)) of the linear motor moves is cleaned to remove the foreign matter, the movement of the table (4) is smooth. Moreover, the linear motor will not be damaged. This results in the linear motor capable of cleaning the movement surface on which the movable member of the linear motor moves.

## Description

### BACKGROUND OF THE INVENTION

### 1. Field of the Invention

The present invention relates to a linear motor and, more particularly, to a linear motor suitable for use in an environment in which foreign matter is likely to enter a gap between relative movement surfaces of a linear motor in a machine tool.

### 2. Description of the Related Art

Linear motors include a field yoke on which permanent magnets are mounted, and an armature composed of coils which is opposed to the field yoke. In the linear motor, one of the field yoke and armature is fixed to a stationary member, the other of the field yoke and armature is attached to a movable member, and the movable member thereof is moved rectilinearly.

As the movable member included in the linear motor moves rectilinearly, the linear motor is suitable for driving a table or the like of a machine tool or any other machine, rectilinearly, along the X, Y, and Z axes in the machine tool or any other machine. When the table or the like is driven to move along the rectilinear axes by a rotating motor, a mechanism for converting rotational motion to linear motion is needed. In contrast, the linear motor can directly drive the table or the like to move rectilinearly along the axes, so that a motion converting means is not needed. The linear motor is therefore efficient.

As mentioned above, the linear motor is already well known. However, literature disclosing the related art of the present invention according to which a movement surface on which a movable member moves is cleaned, cannot be found.

As one of a field yoke and an armature is arranged on a movement surface of a movable member, and the other of the field yoke and the armature is mounted in the linear motor, the movement surface is exposed to the outside when it is not opposed to the movable member. Therefore, when the linear motor is used as a drive source for driving a movable member such as a table of a machine tool, swarf, cutting oil, or the like resulting from machining a work piece performed by the machining tool may drop onto and disperse over the movement surface. If swarf or the like disperses over the movement surface, it becomes an obstacle when the movable member such as a table is moved. Consequently, this leads to a problem that the movable member may not be smoothly controlled. Moreover, the swarf or the like may damage the field yoke or the armature.

When a linear motor is used as a drive source for driving a machine or equipment other than the machine tool, if there is a fear that dust or foreign matters may drop to and disperses over the movement surface of the movable member in the machine or equipment, a similar problem, as mentioned above for the machine tool, may arise.

An object of the present invention is to provide a linear motor capable of cleaning a movement surface on which a movable member moves.

### SUMMARY OF THE INVENTION

The present invention provides a linear motor having one of a field yoke on which permanent magnets are mounted, and an armature which is opposed to the field yoke, fixed to a stationary member, and having the other of the field yoke and the armature attached to a movable member. The linear motor further comprises a compressed air feeding means that is mounted on the movable member and jets compressed air to a movement surface, on which the movable member moves, so as to remove foreign matters. The compressed air feeding means includes a means for toggling the feed of compressed air on and off by interlocking it with movement of the movable member. Moreover, a command to toggle the feed of compressed air on and off is issued from a control unit to drive and control the linear motor. Furthermore, the command to toggle the feed of compressed air on and off is described in a machining program to be installed in the control unit.

The movement surface on which the movable member of the linear motor moves is cleaned by jetting compressed air to the movement surface, whereby foreign matter on the movement surface is removed. Consequently, the movable member can move smoothly without hindrance. Moreover, the field yoke and the armature of the linear motor can be protected from being damaged by the foreign matters.

These and other objects, features, and advantages of the present invention will be more apparent in light of the detailed description of exemplary embodiments thereof as illustrated by the drawings.

### BRIEF DESCRIPTION OF THE DRAWINGS

Fig. 1 is a perspective view of a linear motor in accordance with an embodiment of the present invention; and
Fig. 2 is an explanatory diagram concerning control of supply of compressed air in the embodiment.

### DETAILED DESCRIPTION

Referring to the drawings, an embodiment of the present invention will be described below.

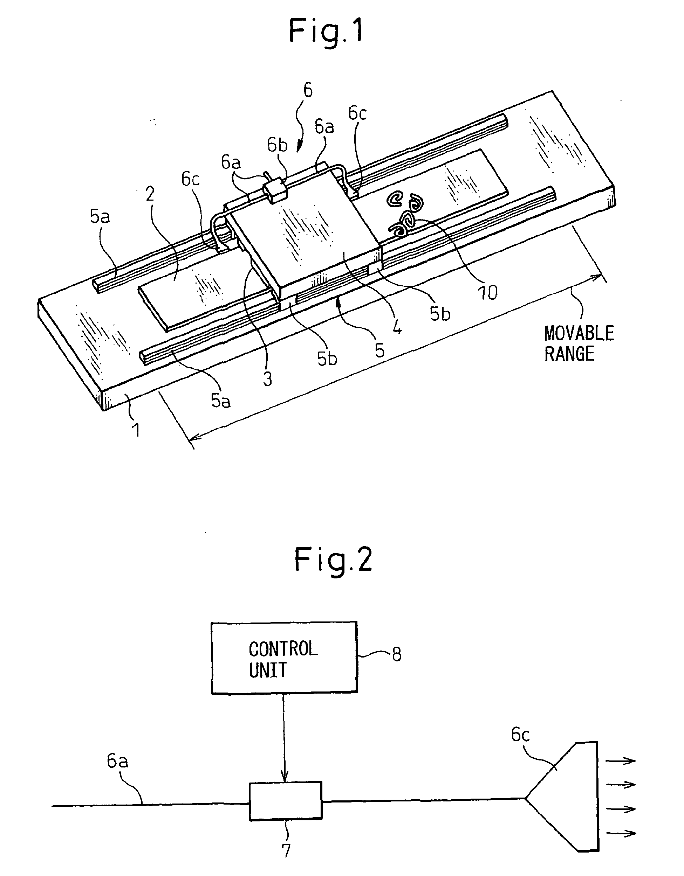

Fig. 1 is a perspective view of a linear motor in accordance on the embodiment of the present invention. A field yoke 2 of a magnet plate having permanent magnets mounted thereon and that is included in the linear motor is fixed to a stationary member 1 such as a base of a machine tool. Guide rails 5a of a rectilinear movement guide 5 to guide a table 4 which is a movable member are arranged on both sides of the field yoke 2 of the magnet plate. An armature 3 composed of coils is mounted on the lower surface of the table 4 so that the armature is opposed to the field yoke 2. The table 4 has guide members 5b that guide the rectilinear movement of the table 4 while being engaged with the guide rails 5a constituting the rectilinear movement guide 5.

The foregoing constitution of the linear motor is not different from that of a known conventional linear motor. The linear motor of the present invention is different from the conventional linear motor in the point that the linear motor of the present invention further comprises a cleaning means for cleaning the surface of the magnet plate (field yoke 2) that is a movement surface on which the table 4, that is the movable member, moves.

According to the present embodiment, as the cleaning means, a compressed air feeding means 6 for jetting compressed air to the surface of the field yoke (magnet plate) 2 is provided. By jetting the compressed air, foreign matter dispersing over the field yoke (magnet plate) 2, such as, swarf or cutting oil is removed.

In Fig. 1, a pipe 6a provides a passage of compressed air and is attached to the table 4. A branching unit 6b branches the passage of the compressed air so as to route supplied compressed air to the right and to the left. The branching unit 6b is mounted on the table 4. As shown in Fig. 1, the pipe 6a branches out through the branching unit 6b to extend forward and backward with respect to a moving direction of the table 4. Compressed air jetting ports 6c such as nozzles are formed at the respective distal ends of the pipe 6a. The compressed air feeding means 6 includes the pipe 6a, branching unit 6b, and compressed air jetting ports 6c. In the present embodiment, the compressed air jetting ports 6c of the compressed air feeding means 6 are located ahead of and behind the table 4 with respect to the moving direction of the table 4. Compressed air is jetted to the field yoke (magnet plate) 2 through the compressed air jetting ports 6c, whereby foreign matter 10 such as swarf or cutting fluid or cutting oil dispersed over the field yoke (magnet plate) 2 is removed. Moreover, the compressed air feeding means 6 moves according to the movement of the table 4 so as to clean the entire surface of the field yoke (magnet plate) 2. Therefore, the foreign matter can be removed from the table movement surface without the necessity of stopping the machine in which the linear motor is used. Incidentally, the direction in which compressed air is jetted from the compressed air feeding means 6 is adjusted according to the location of a machine or an environment thereof so that the compressed air will be jetted in an optimal direction.

However, if the compressed air feeding means 6 jets compressed air all the time, a consumption of compressed air increases to raise the running cost. Air is therefore fed only when it is needed. Therefore, as shown in Fig. 2, an electromagnetic valve 7 is arranged in the middle of the passage of compressed air realized by the pipe 6a. By the control unit 8 controlling the linear motor, the electromagnetic valve 7 is controlled to toggle the feed of compressed air on and off.

Therefore, control codes to open and close the electromagnetic valve are defined and contained in a machining program or a user-created macroprogram. The control unit 8 controls the electromagnetic valve 7 according to the control codes. For example, if the control codes are contained in the machining program, the machining program signifies, as in an example presented below, that: the electromagnetic valve 7 is opened (control code M300 serves as an Open command for opening the electromagnetic valve 7) prior to axial movement (driving of the linear motor); and compressed air is jetted to the magnet plate (field yoke 2) according to the movement of the table to remove the foreign matters 10 such as swarf or cutting oil from the field yoke (magnet plate) 2. When the axial movement is completed (driving the linear motor is completed), the electromagnetic valve 7 is closed in order to terminate the feed of compressed air (control code M301 serves as a Close command for closing the electromagnetic valve 7).

Example of Machining Program
- M300:: initiation of compressed air feed
- X600, Y400, Z-100:: axial movement
- X0, Y0, Z0:: axial movement
- X600, Y400, Z-100:: axial movement
- X0, Y0, Z0:: axial movement
- M301:: termination of compressed air feed

Moreover, a cleaning program for cleaning the linear motor over the entire stroke (movable range) of the linear motor corresponding to the whole length of the guide rails 5a is created and contained in the control unit 8. A command to run the cleaning program manually may be inputted prior to initiation of machining or during running of the machining program. A macroprogram defining predetermined actions and a control code may be read to run the cleaning program with the control code.

In the foregoing embodiment, the magnet plate that is the field yoke 2 is fixed to the stationary member 1, and the armature 3 composed of coils is attached to the movable table 4. Alternatively, the armature 3 may be fixed to the stationary member 1 and the field yoke (magnet plate) 2 may be attached to the table 4. The present invention can also apply to a linear motor having such structure.

In the foregoing embodiment, the linear motor is used as a drive source for driving a table or the like of a machine tool, along a feed shaft. The present invention can apply to a linear motor adapted to a machine or equipment other than the machine tool, the machine is used in an environment in which foreign matters may drop onto a movement surface on which a movable member of the linear motor moves.

Although the invention has been shown and described with exemplary embodiments thereof, it should be understood, by those skilled in the art, that the foregoing and various other changes, omissions, and additions may be made therein and thereto without departing from the spirit and the scope of the invention.

## Claims

1. A linear motor including a field yoke (2) on which permanent magnets are mounted, an armature (3) which is opposed to the field yoke (2), a stationary member (1) to which one of the field yoke (2) and the armature (3) is fixed, and a movable member (4) to which the other of the field yoke (2) and the armature (3) is attached, **characterized in that** the linear motor comprises:
a compressed air feeding means (6) that is mounted on the movable member (4) and jets compressed air to a movement surface, on which the movable member moves, so as to remove foreign matter (10).

2. The linear motor according to Claim 1, wherein the compressed air feeding means (6) includes a means for toggling the feed of compressed air on and off by interlocking it with the movement of the movable member (4).

3. The linear motor according to Claim 2, wherein a command to toggle the feed of compressed air on and off is issued by a control unit (8) to drive and control the linear motor.

4. The linear motor according to Claim 3, wherein the command to toggle the feed of compressed air on and off is described in a machining program to be installed in the control unit (8).
